# EUROPEAN PATENT APPLICATION

(11) **EP 0 767 117 A1**
(43) Date of publication of application: **09.04.1997**
(21) Application number: 96202703.3
(22) Date of filing: 26.09.1996
(51) Int. Cl.: B65G 45/08

(54) **Maintenance device for a tow chain**

(30) Priority: 04.10.1995 BE 9500824
(71) Applicant: Elektriciteit voor Goederenbehandeling Marine en Industrie, in het verkort EGEMIN, naamloze vennootschap, B-2900 Schoten (BE)
(72) Inventor: Van Lierde, Carlos Gustaaf Arthur, 9270 Laarne (BE)
(74) Representative: Donné, Eddy

(57) **Abstract**

Maintenance device for a tow chain, characterized in that it consists at least of the combination of a rotatable arm (14) resting on the tow chain (1) on the one hand, and of multiple maintenance and/or control means which are provided on the rotatable arm (14) on the other hand.

## Description

The present invention concerns a maintenance device for a tow chain, in particular a tow chain as is used in conveying systems of the type whereby trolleys or such are moved via a towing pin provided on such trolleys and which meshes in a catch link.

Such tow chains are already known as such and can be made in various forms. Examples thereof are described among others in the documents EP 0.513.912, NL 7214824, DE 1.775.740, FR 2.161.870 and US 3.389.662.

Such tow chains are usually guided through a groove in the bottom and are driven for example by means of a driving loop, an example of which is known from US 3.389.662.

The invention also aims to provide a maintenance device with which such tow chains can be optimally maintained.

To this end, the invention concerns a maintenance device for a tow chain, characterized in that it consists at least of the combination of a rotatable arm resting on the tow chain on the one hand, and of multiple maintenance and/or control means which are provided on the rotatable arm on the other hand.

Providing multiple maintenance and/or control means on the rotatable arm is advantageous in that the device is relatively compact and in that its good working order can be controlled in one step.

The maintenance means preferably include cleansing means and lubrication means, whereas the control means consist of detection means to detect the sagging of the tow chain, for example as a result of strain or breaking. According to the most preferred embodiment, the rotatable arm contains both the above-mentioned cleansing means, lubrication means and detection means.

According to a practical embodiment, the invention also aims to provide a solution for lubricating the tow chain which does not show the disadvantages of the lubrication devices known until now.

According to a known embodiment, the tow chain is drawn through an oil bath, which is disadvantageous in that the tow chain is lubricated excessively, as a result of which the environment of the chain is soiled.

According to another known technique, oil is provided on the top side of the tow chain by means of dripping, spraying or sprinkling. Providing oil on the top side of the tow chain also leads to contamination.

Moreover, the known embodiments are disadvantageous in that relatively much oil ends up next to the tow chain.

A remedy is provided by the present invention in that the lubrication takes place at the bottom side of the tow chain, which is carried out in a very efficient manner by making the maintenance device work in conjunction with the lower chain part of a driving loop.

Because the tow chain is situated on the lower part of the driving loop with its bottom side upwards, the invention makes it perfectly possible to lubricate only the bottom side of the tow chain by providing oil on it from top to bottom.

As the lubrication means are provided on a rotatable arm according to the invention, which rests on the tow chain, this also offers the advantage that the distance between the supply point of the oil or such and the tow chain always remains the same, so that the lubrication is insensitive to sagging resonances or such, and so that no or practically no oil ends up next to the tow chain.

In order to better explain the characteristics of the invention, the following preferred embodiment is described as an example only without being limitative in any way, with reference to the accompanying drawings, in which:
figure 1 shows a maintenance device according to the invention;
figure 2 shows the part which is indicated with F2 in figure 1 to a larger scale;
figures 3, 4, 5 and 6 show sections, according to lines III-III, IV-IV, V-V and VI-VI respectively in figure 2;
figure 7 shows a section according to line VII-VII in figure 3.

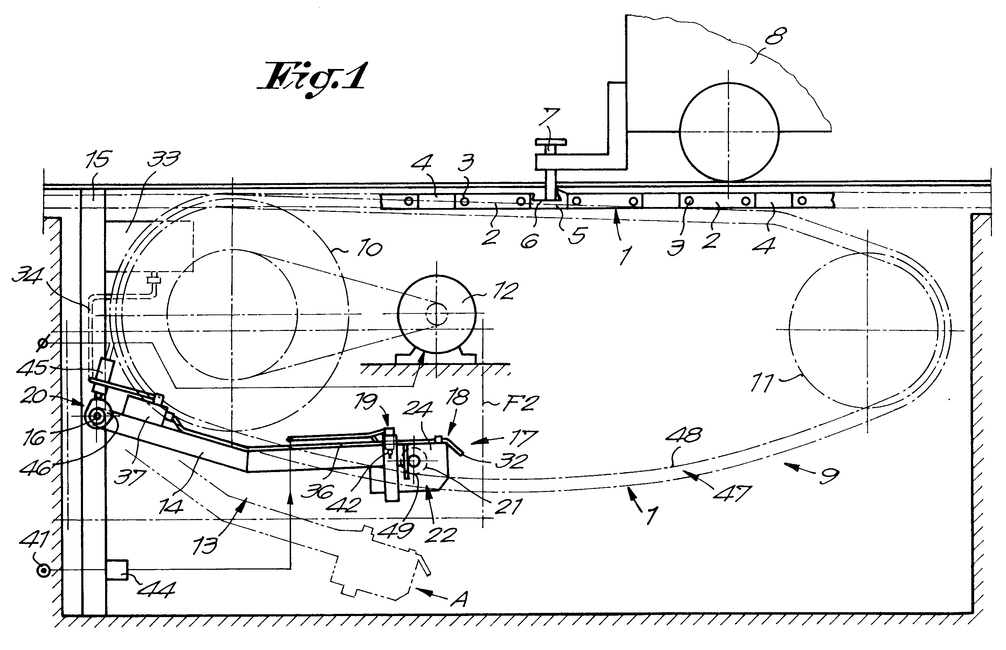

As represented in figure 1, the invention concerns a tow chain 1.

Such a tow chain 1 is composed of links, in this case outside links 2 and inside links 4 provided in between them by means of pivots 3.

At regular distances, the tow chain 1 is provided with an inside link which is carried out as a catch link 5 which has a seating 6, in which a tow pin 7 of a trolley 8 or such can be provided.

The tow chain 1 can be driven by means of a driving loop 9, whereby the tow chain 1 is guided around two chain wheels 10-11, whose chain wheel 10 is driven, for example via an electromotor 12.

The invention consists of a maintenance device 13 with which the tow chain can be optimally maintained as far as lubrication and/or cleansing and/or service control is concerned.

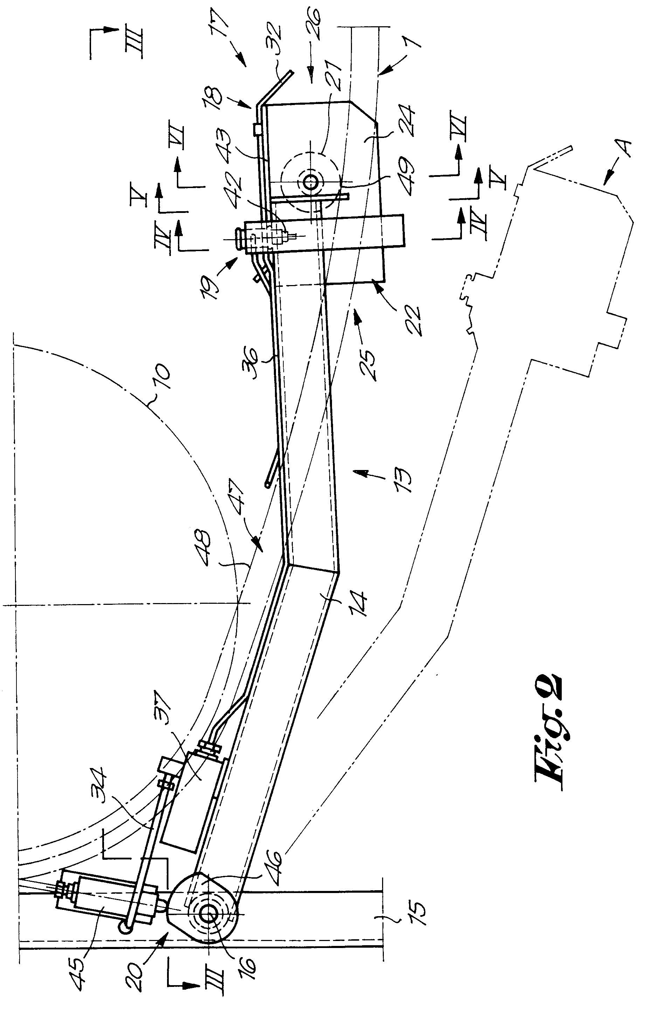

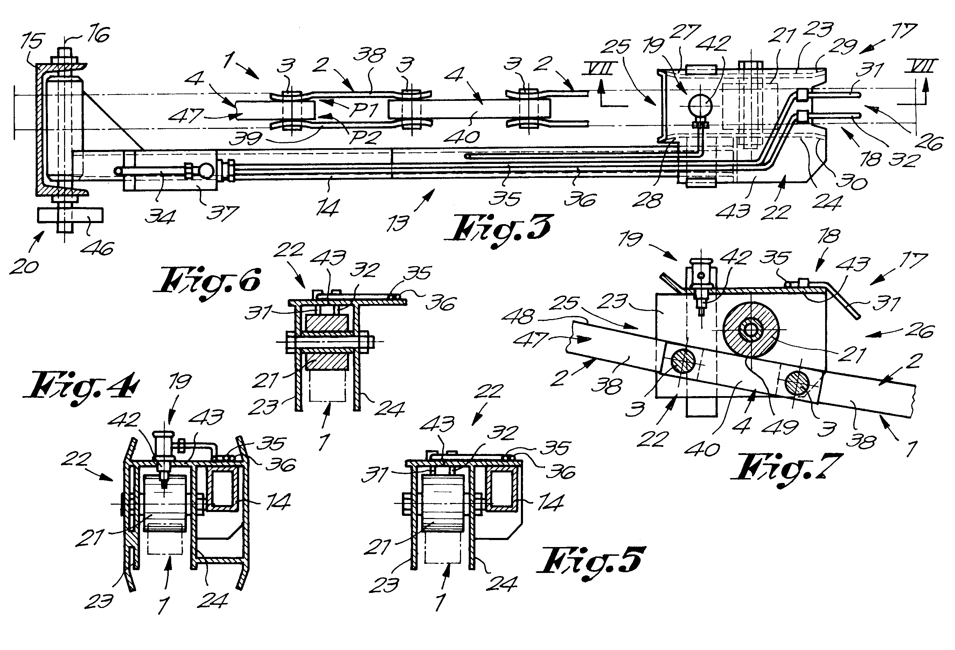

As shown in figures 1 to 7, this maintenance device 13 consists of the combination of an arm 14 on the one hand, which can rotate around a hinge point 16 provided on a frame 15 and which rests at its free end 17 on the tow chain 1, and of multiple maintenance and/or control means on the other hand, which are provided on the rotatable arm 14.

These maintenance and control means can be of different nature.

According to a preferred embodiment, however, which is represented in the figures, a combination is made of maintenance means formed of lubrication means 18 and cleansing means 19 on the one hand, and control means formed of detection means 20 to detect any excessive sagging of the tow chain 1, which can indicate that there is too much strain or breaking.

As represented in figures 2 to 7, the rotatable arm 14 rests on the tow chain 1 by means of a roller 21 provided at the free end 17. This roller 21, the lubrication means 18 and the cleansing means 19 are placed in a head 22 provided at the free end 17, which is preferably situated over the tow chain 1, by means of guide plates 23-24.

These guide plates have conical guides at the entrance 25 of the head 22, and possibly also at the outlet 26, formed of plate parts 27-28 and 29-30.

The rotatable arm 14 is mounted such that the free end 17 extends in the direction of movement of the tow chain 1.

The lubrication means 18 consist of an oil drop lubrication or an oil spraying device with one or several, in this case two supply points 31-32 for oil or another lubricant. The lubricant is hereby supplied as of the oil reservoir 33, via pipes 34-35-36, in which is either or not provided a valve, a pump or a dose-measuring system 37, which, as represented in figures 1 to 3, can be mounted on the arm 14.

In the case where use is made of a tow chain 1, whereby the outside links 2 consist of two standing flanks 38-39 as represented in figure 3, and the inside links 4 have an elongated body 40 which fits between the ends of the flanks 38-39 of the adjacent outside links 2, use is made according to the invention of two supply points 31-32 for oil or such, which are situated perpendicular to the places P1 and P2 according to a cross section, where the partitions between the flanks 38-39 and the bodies 40 of the links are situated. In this manner is obtained an optimal lubrication at the height of the pivots 3.

The cleansing means 19 consist of a blow nozzle 42 connected to a compressed air source 41 which blows air from top to bottom through the tow chain 1. In order to optimally direct the blow air and to prevent that the soil would be blown in an unwanted direction, a covering is provided around the blow nozzle 42, which in this case is formed of the above-mentioned guide plates 23-24 and a cover plate 43.

It is clear that the blowing action can be either permanently, temporarily or periodically, whereby the switching-on can be controlled by means of a manually or automatically operated valve 44 or such.

In the case where the maintenance means contain both cleansing means 19 and lubrication means 18, the cleansing means 19 will be placed before the lubrication means 18, so that the cleansing takes place before the lubrication.

The above-mentioned detection means 20 consist of a switch 45 operated by means of a rotatable arm 14 which is coupled for example to the drive of the tow chain 1, whereby this switch 45 is controlled by means of a cam 46 mounted in the hinge point 16 of the arm 14 and rotating together with the arm 14. Said cam 46 is shaped such that the switch is operated as soon as the tow chain 1 shows a large sagging, for example when the rotatable arm 14 sinks into the position A as represented in figure 2.

According to a specific embodiment of the invention, the maintenance device 19 works in conjunction with the lower chain part 47 of a driving loop 9 provided in the tow chain 1. It is important hereby that the lubrication means 18 are active at the top of the chain part 47, so that the oil or such falls on the chain part 47 exclusively through the action of gravity, which results in the lubrication of the bottom side 48 of the tow chain 1.

The hinge point 16 of the rotatable arm 14 is preferably situated outside the driving loop 9, in the immediate vicinity of the driven chain wheel 10, whereas the head 22 rests on the side of the tow chain 1 which is situated on the inside of the driving loop 9.

In this manner is obtained that the multifunctional maintenance device actually occupies little space, is little disturbing for the other parts of the tow device and can be easily built in in any existing device.

In order to be able to easily carry out repairs of the tow chain 1 or the rotatable arm 14, the arm 14 only extends along one side of the tow chain 1, and the head 22 can be moved laterally in relation to this arm 14.

The distance of the hinge point 16 and the contact point 49 in relation to the tow chain 1 is preferably at least 80 cm and, better still, about 100 cm. By using an arm 14 with such dimensions, possible lateral oscillations which occur in the chain part 47 can be easily absorbed thanks to the clearance in the hinge point 16 without the rotating arm 14 being damaged hereby.

A rotatable arm 14 which has the above-mentioned dimensions also offers the advantage that a large course can be realized at the height of the head 22, so that the cleansing means 19 and the detection means 20 will always follow the tow chain 1.

The working of the maintenance device 13 is based on the fact that the head 22 follows the movement of the tow chain and that a cleansing and lubrication can be carried out at any time by activating, either at random, periodically or continuously, the cleansing means 19 and the lubrication means 18.

The tow chain 1 is cleansed hereby in that the soil adhering to it is loosened by means of the blow air.

The lubrication takes place in that the oil or such ends up on the bottom side 48.

A broken or too slack tow chain results in the lower chain part 47 showing a greater sagging than normal. As soon as the rotatable arm 14 hereby occupies the position A, the switch 45 will occupy another position, so that for example the drive is stopped because the power supply is interrupted or because another signal is given which indicates that action is required.

The present invention is by no means limited to the embodiment described above and represented in the accompanying drawings; on the contrary, such a maintenance device can be made in various forms and dimensions while still remaining within the scope of the invention.

## Claims

1. Maintenance device for a tow chain, characterized in that it consists at least of the combination of a rotatable arm (14) resting on the tow chain (1) on the one hand, and of multiple maintenance and/or control means which are provided on the rotatable arm (14) on the other hand.

2. Maintenance device according to claim 1, characterized in that the maintenance means at least consist of lubrication means (18).

3. Maintenance device according to claim 2, characterized in that the lubrication means (18) consist of an oil drop lubrication or an oil spraying device.

4. Maintenance device according to claim 3, designed to work in conjunction with a tow chain (1) of the type which consists of outside links (2) which at least consist of two standing flanks (38-39), and inside links (4) coupled to these via horizontal pivots (3), which have an elongated body (40) which fits between the ends of the flanks (38-39) of the adjacent outside links (2), characterized in that the lubrication means (18) have two supply points (31-32) for oil or such which are situated perpendicular to the places (P1-P2) according to a cross section, where the partitions between the flanks (38-39) and the bodies (40) are situated.

5. Maintenance device according to claim 1, characterized in that the maintenance means at least consist of cleansing means (19).

6. Maintenance device according to claim 5, characterized in that the cleansing means (19) consist of a blow nozzle (42) connected to a compressed air source (41) which blows air from top to bottom through the tow chain (1).

7. Maintenance device according to claim 1, characterized in that it contains control means which consist of detection means (20) to detect any excessive sagging of the tow chain (1).

8. Maintenance device according to claim 7, characterized in that the detection means (20) consist of a switch (45) operated by means of a rotatable arm (14) which is coupled to the drive of the tow chain (1), whereby this switch (45) is controlled by means of a cam (46) mounted in the hinge point (16) of the arm (14) and rotating together with the arm (14).

9. Maintenance device according to any of the preceding claims, characterized in that the maintenance means contain both cleansing means (19) and lubrication means (18) and in that the cleansing means (19) are placed immediately before the lubrication means (18).

10. Maintenance device according to any of the preceding claims, characterized in that the rotatable arm (14) rests on the tow chain (1) by means of a roller (21).

11. Maintenance device according to claims 9 and 10, characterized in that the rotatable arm (14) is provided with a head (22) at its free end (17), in which the roller (21), the cleansing means (19) and the lubrication means (18) are provided.

12. Maintenance device according to any of the preceding claims, characterized in that the rotatable arm (14) is provided with a head (22) at its free end (17) which is situated over the tow chain (1) and which has a conical guide for the tow chain (1) at its entrance (25).

13. Maintenance device according to any of the preceding claims, characterized in that it works in conjunction with the lower chain part (47) of a driving loop (9) provided in the tow chain (1).

14. Maintenance device according to any of the preceding claims, characterized in that the rotatable arm (14) is directed with its free end (17) in the direction of movement of the tow chain (1).

15. Maintenance device according to claims 13 and 14, characterized in that the hinge point (16) of the rotatable arm (14) is situated outside the driving loop (9), in the immediate vicinity of the driven chain wheel (10) of the driving loop (9), whereas the free end (17) of the rotatable arm (14) rests on the side of the tow chain (1) which is directed towards the inside of the driving loop (9).

16. Maintenance device according to any of the preceding claims, characterized in that the distance of the hinge point (16) of the rotatable arm (14) and the contact point (49) in relation to the tow chain (1) is at least 80 cm and, better still, about 100 cm.
